# DEMANDE DE BREVET EUROPEEN

(11) **EP 4 464 842 A1**
(43) Date de publication de la demande: **20.11.2024**
(21) Numéro de dépôt: 24176169.1
(22) Date de dépôt: 16.05.2024
(51) Int. Cl.: E01C 3/00, A01G 9/033, E01C 5/20, E01C 9/00, E04C 2/36

(54) **DALLE DE STABILISATION DE SOL À ALVÉOLES CONÇUES POUR CONTENIR UN MATÉRIAU DE COMBLEMENT**

(30) Priorité: 17.05.2023 FR 2304899
(71) Demandeur: Permab, 83400 Hyeres (FR)
(72) Inventeur: Guyomar, Florent, 83400 HYERES (FR); Muller, Julien, 83400 HYERES (FR); Guyomar, Jean-Julien, 38500 COUBLEVIE (FR)
(74) Mandataire: Rhein, Alain

(57) **Abrégé**

L'invention concerne une dalle (1) de stabilisation de sol à alvéoles (2 ; 2a) destinées à contenir un matériau de comblement, par exemple un substrat de plantation, tel que de la terre, ou encore des granulats de type sable, gravier ou autre, une alvéole (2 ; 2a) comportant une paroi périphérique (3) s'étendant perpendiculairement depuis un plan de base (4) et comprenant un chant inférieur (5) rendu solidaire, par collage et/ou soudure et/ou emboîtement, d'un support (6), Avantageusement, la paroi périphérique (3) d'une alvéole (2, 2a) comporte un chant supérieur définissant une arête (15) en forme d'onde (16) comprenant des sommets (17) entre lesquelles s'étendent des parties en dépression (18), les sommets (17) étant partagées entre au moins deux alvéoles adjacentes (2, 2a) et se situent à hauteur d'un noeud d'intersection (9) entre ces dernières

## Description

La présente invention concerne une dalle de stabilisation de sol à alvéoles conçues pour contenir un substrat de plantation et/ou du sable et/ou du gravier ou tout autre matériau de comblement.

La présente invention concerne le domaine des aménagements paysagers, voirie et similaire. Elle a trait, plus particulièrement, à des dalles de structure alvéolaire, les alvéoles étant conçues pour contenir, selon le cas, un substrat de plantation ou des granulats, de type sable ou gravier. Ce type de dalle contribue, le plus fréquemment, à stabiliser un sol et à retenir un revêtement étendu sur ce dernier.

Il est d'ores et déjà connu de nombreuses dalles alvéolaire répondant à la description ci-dessus permettant de créer des allées de jardin, des zones de stationnement de véhicules, des accès à un garage, etc. A titre d'exemple, de telles dalles procurent une portance susceptible d'éviter l'affaissement du sol au passage des roues d'un véhicule léger sur une aire de stationnement.

Quant aux alvéoles, elles empêchent le fluage du matériau qu'elles contiennent sous l'effet d'une charge passant au-dessus de ces dalles. Ces alvéoles ont également pour fonction d'éviter l'écoulement de ce matériau, qu'il s'agisse de la terre ou de gravier, dans le cas d'une implantation en pente. Comme exemple, on peut citer le cas de l'aménagement paysagé de talus au moyen d'un revêtement composé de gravier. Chaque alvéole de ces dalles contribue au maintien d'une épaisseur constante de gravier le long de ce talus

Les dalles de conception la plus courante sont de type nid d'abeille et comportent des alvéoles parallélépipédiques, plus particulièrement de forme hexagonale, chaque côté de la paroi périphérique d'une telle alvéole étant partagé avec une alvéole adjacente. En périphérie, une dalle peut comporter des demi-alvéoles que viennent compléter des demi-alvéoles en bordure d'une dalle juxtaposée.

Cette structure alvéolaire de ces dalles connues est très souvent réalisée en matériau synthétique moulé et repose, selon le cas, sur une toile en matériau non-tissé, de type géotextile, ou sur une plaque de base ajourée également en matériau synthétique, comme décrit par exemple dans le document FR2 721 626. Dans ce cas, les ouvertures dans la plaque de base sont de forme hexagonale tout comme les alvéoles. Elles sont toutefois décalées par rapport à ces dernières. Une telle plaque de base ajourée favorise l'écoulement de l'eau en comparaison à une toile en matériau non-tissé ayant tendance à se colmater dans le temps.

Ces dalles connus adoptent le plus souvent une forme rectangulaire ou carrée et comportent des moyens d'emboîtement réciproques. Chaque dalle comporte sur deux de ses côtés des moyens d'emboîtement, tandis que sur les deux autres côtés elles sont pourvues de moyens d'emboîtement complémentaire permettant d'emboîter ces dalles les unes aux autres. Il est ainsi possible de recouvrir une grande surface malgré des dimensions de dalle relativement réduite qui en facilite la fabrication, l'emballage et le transport. La configuration de ces moyens d'emboîtement, ainsi que des moyens d'emboîtement complémentaires est souvent définie pour maintenir les dalles les unes par rapport aux autres dans des directions parallèles au plan de ces dalles, mais aussi sur une direction perpendiculaire.

Si les dalles à alvéoles hexagonales, de type nid d'abeille, sont les plus répandues, il existe une multitude de dalles dont les alvéoles adoptent d'autres formes, par exemple circulaire, carrée, en losange, voire comportant une combinaison d'alvéoles de différentes formes, dont certaines complémentaires à la disposition d'autres alvéoles.

Quelle que soit leur configuration, une alvéole comporte une paroi périphérique s'étendant perpendiculairement au-dessus d'un plan de base définie par une plaque de base ou un géotextile. La hauteur de cette paroi périphérique délimite celle du matériau susceptible d'être contenu dans ces alvéoles. Les arêtes en bordure supérieure de ces parois périphériques des alvéoles sont souvent apparentes et confèrent à l'espace aménagé au moyen de ces dalles connues un caractère artificiel peu esthétique. S'il est possible d'étaler au-dessus des alvéoles de ces dalles une couche de matériau additionnelle pour rendre ses arêtes non visibles, celles-ci finissent toujours par apparaître en surface sous l'effet du fluage de cette couche de matériau non retenus par les alvéoles.

On peut imaginer entailler le bord supérieur de ces parois périphériques des alvéoles de manière à ne rendre ces arêtes que partiellement visible, mais la portance des dalles définies par ces portions d'arêtes au sommet des alvéoles s'en trouve nécessairement réduite. De plus, de telles portions d'arête cèdent rapidement, en venant se replier, sous le passage d'une charge en les rendant encore plus visible et inesthétique.

A ce propos, il est connu le document US 4 118 892 des dalles de sol composées d'alvéoles de forme polygonale carrée délimité par des parois ajourées et dont le chant supérieur comporte selon le cas une encoche arrondie ou deux encoches. Les ajours dans les parois ont pour inconvénient de réduire la tenue mécanique de ces dernières et de limiter la profondeur des encoches qui ont davantage pour fonction de définir des picots. Comme indiqué dans ce document, les encoches ont une profondeur approximative de 5mm de sorte que les trous dans les parois puissent être aussi grands que possible. Dans ces conditions, les arrêtes au sommet des alvéoles restent visibles et donc inesthétiques.

Il est encore connu par le document KR 102 512 786 des dalles de sol de conception similaire, si ce n'est que ces alvéoles sont dans ce cas de forme hexagonale.

Il est également connu par le document US 4 621 942 une dalle de sol comportant des alvéoles de forme hexagonale comportant un trou rond.

C'est dans le cadre d'une démarche inventive qu'il a été recherché une solution pour rendre en surface la structure alvéolaire de ces dalles moins visible. Dans ce contexte qu'il a été imaginé que l'arête supérieure de la paroi périphérique d'une alvéole décrive une forme d'onde en définissant des sommets entre lesquelles s'étendent des parties en dépression, les sommets étant partagés entre au moins deux alvéoles adjacentes en se situant à hauteur d'un noeud d'intersection entre ces dernières.

Des alvéoles de section polygonale comportent des noeuds d'intersection entre elles, définis par deux côtés adjacents d'une alvéole et au moins un côté d'une autre alvéole juxtaposée.

Dans le cas d'alvéoles de forme ronde ou ovoïde, ces noeuds d'intersection sont définis par la zone tangentielle entre deux alvéoles contiguës.

Ainsi l'invention concerne une dalle de stabilisation de sol à alvéoles destinées à contenir un matériau de comblement, par exemple un substrat de plantation, tel que de la terre, ou encore des granulats de type sable, gravier ou autre, une alvéole comportant une paroi périphérique s'étendant perpendiculairement depuis un plan de base et comprenant un chant inférieur rendu solidaire, par collage et/ou soudure et/ou emboîtement, d'un support, les alvéoles étant de section polygonale et comportant des noeuds d'intersection entre elles, définis par deux côtés adjacents d'une alvéole et au moins un côté d'une autre alvéole juxtaposée, caractérisé en ce que la paroi périphérique d'une alvéole comporte un chant supérieur définissant une arête en forme d'onde en dents de scie régulières ou de type sinusoïdal, comprenant des sommets entre lesquelles s'étendent des parties en dépression, une partie en dépression comportant, entre deux sommets consécutifs d'une arête de la paroi périphérique d'une alvéole, deux portions d'arête descendante opposées se rejoignant dans une zone médiane, les sommets étant partagées entre au moins deux alvéoles adjacentes et se situent à hauteur d'un noeud d'intersection entre ces alvéoles adjacentes.

Selon un même concept inventif, l'invention concerne encore une dalle de stabilisation de sol à alvéoles destinées à contenir un matériau de comblement, par exemple un substrat de plantation, tel que de la terre, ou encore des granulats de type sable, gravier ou autre, une alvéole comportant une paroi périphérique s'étendant perpendiculairement depuis un plan de base et comprenant un chant inférieur rendu solidaire, par collage et/ou soudure et/ou emboîtement, d'un support, les alvéoles étant de section ronde ou ovoïde et comportant des noeuds d'intersection entre elles, définis par la zone tangentielle entre deux alvéoles contiguës, caractérisé en ce que la paroi périphérique d'une alvéole comporte un chant supérieur définissant une arête en forme d'onde en dents de scie régulières ou de type sinusoïdal, comprenant des sommets entre lesquelles s'étendent des parties en dépression, une partie en dépression comportant, entre deux sommets consécutifs d'une arête de la paroi périphérique d'une alvéole, deux portions d'arête descendante opposées se rejoignant dans une zone médiane, les sommets étant partagées entre au moins deux alvéoles adjacentes et se situent à hauteur d'un noeud d'intersection entre ces alvéoles adjacentes.

Avantageusement, dans la zone médiane entre deux portions d'arête descendante opposées, l'arrête d'une partie en dépression se situe à une distance d'un plan, passant par les sommets, supérieure à 5 millimètres, de préférence supérieure à 10 millimètres, de préférence supérieure à 15 millimètres.

Au travers d'une telle configuration, un sommet est soutenu dans différentes directions par des portions d'arête agissant à la manière de jambes de force, lui conférant une très grande résistance à l'écrasement. En conséquence, en remplissant les dalles d'un matériau de comblement quelconque sur toute la hauteur les alvéoles d'une dalle conforme à l'invention, seuls les sommets de ces alvéoles peuvent apparaître en surface. Tenant compte de la taille de ces sommets ils sont susceptibles de se confondre avec le matériau de comblement, pour peu que les dalles soient de couleur en rapport avec ce matériau.

Selon une particularité de l'invention, au moins certaines des parties en dépression que comporte une arête d'une alvéole, préférentiellement toutes les parties en dépression, comportent au moins une encoche de limitation de déformation.

Les avantages résultant de la présente invention consistent en ce que les dalles offrent une portance au moins similaire aux dalles existantes, tout en étant très peu perceptibles dans leur situation d'utilisation, c'est-à-dire une fois implantées et remplies du matériau de comblement.

En outre, grâce aux encoches de limitation de déformation définies au niveau des parties en dépression, non seulement ces dalles sont susceptibles d'épouser des variations de forme convexe et concave d'une surface d'implantation, mais, en outre, procurent une limite à la déformation à l'égard d'un effondrement du terrain sous ces dalles. En somme au-delà d'une limite d'affaissement, les performances en termes de stabilisation de sol s'améliorent.

Un autre avantage découle des moyens qui permettent de les emboîter réciproquement, à savoir la force de rappel élastique qu'exercent ces moyens lorsque les dalles sont mises sous contraintes, par exemple dans le cas d'une implantation en pente ou sur une surface à pentes composées.

D'autres particularités et avantages de la présente invention apparaîtront au cours de la description qui va suivre se rapportant à des exemples de réalisation.

La compréhension de cette description sera facilitée en se référant aux figures en annexe dans lesquels :
[Fig.1] est une représentation schématisée en perspective et essentiellement de dessus d'une dalle conforme invention ;
[Fig.2] est une représentation schématisée et en perspective de cette dalle illustrée dans la figure 1, mettant en évidence les sommets des arêtes en forme d'onde des alvéoles ;
[Fig.3] est une vue en perspective de détail de la dalle représentée dans les figures 1 et 2 ;
[Fig.4] est une vue de dessus de la figure 3 ;
[Fig.5a] ; [Fig.5b] ; illustrent schématiquement différentes formes d'alvéoles.
[Fig.6a] ; [Fig.6b] illustre schématiquement la fonction de limitation à la déformation procurée par les encoches au niveau des parties en dépression.

Tel que représenté dans les figures ci-jointes, la présente invention concerne une dalle 1 de stabilisation de sol, préférentiellement en matière synthétique, comprenant des alvéoles 2 destinées à contenir un matériau de comblement, par exemple un substrat de plantation, tel que de la terre, ou encore des granulats de type sable, gravier ou autre.

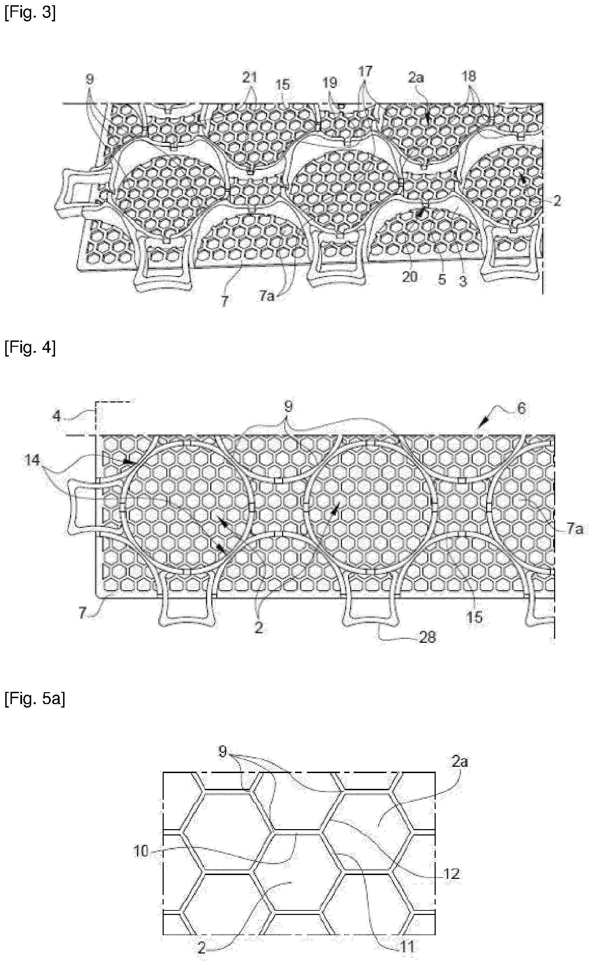

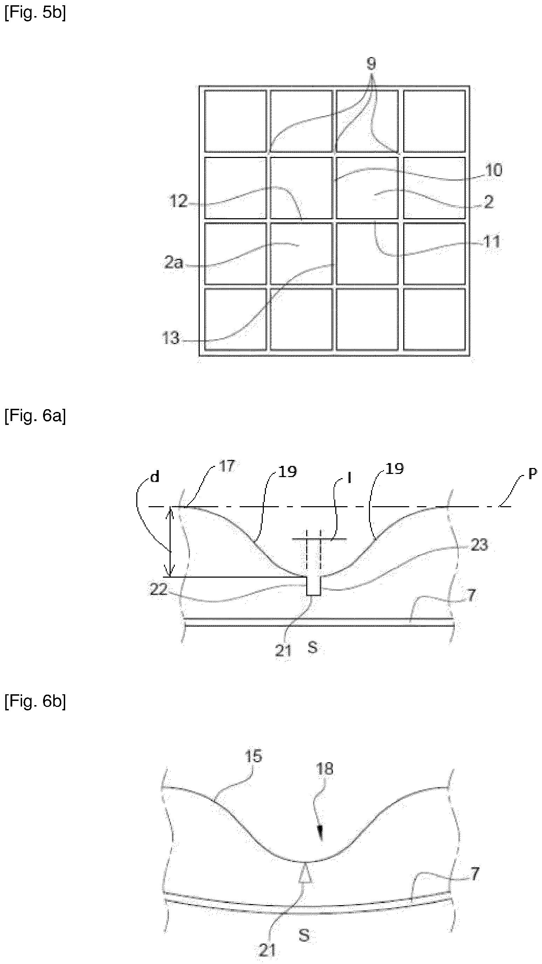

Comme souhaite l'illustrer les figures 5a et 5b, les alvéoles peuvent être de différentes formes : rondes, polygonale parallélépipédique ou non.

Ces alvéoles 2 comportent une paroi périphérique 3 qui s'étend perpendiculairement depuis un plan de base 4. A hauteur de ce dernier, le chant inférieur 5 de cette paroi périphérique 3 des alvéoles 2 est préférentiellement rendu solidaire, par collage et/ou soudure et/ou emboitement, d'un support 6 qui peut être défini, substantiellement, par une toile en non tissé de type géotextile, ou, plus particulièrement, par une plaque de base ajourée 7, avantageusement conçue en un matériau synthétique identique ou au moins compatible avec celui composant les alvéoles 2.

La paroi périphérique 3 de ces alvéoles 2 d'une dalle 1 comporte une hauteur totale 8 définissant la hauteur du matériau de comblement que peuvent contenir ces alvéoles 2. Cette hauteur totale est supérieure à deux centimètres (2cm), préférentiellement égale ou supérieure à quatre centimètres.

Des alvéoles 2 de section polygonale comportent des noeuds d'intersection 9 entre elles, définis par deux côtés adjacents 10, 11 d'une alvéole 2 et au moins un côté 12, 13 d'une autre alvéole 2a juxtaposée. Dans le cas d'alvéoles 2 de forme ronde ou ovoïde, ces noeuds d'intersection 9 sont définis par la zone tangentielle 14 entre deux alvéoles 2, 2a contiguës.

Selon l'invention, l'arête 15 correspondant au chant supérieur de la paroi périphérique 3 d'une alvéole 2, 2a décrit une forme d'onde 16 en définissant des sommets 17 entre lesquelles s'étendent des parties en dépression 18, les sommets 17 étant partagées entre au moins deux alvéoles adjacentes 2, 2a et se situent à hauteur d'un noeud d'intersection 9 entre ces dernières.

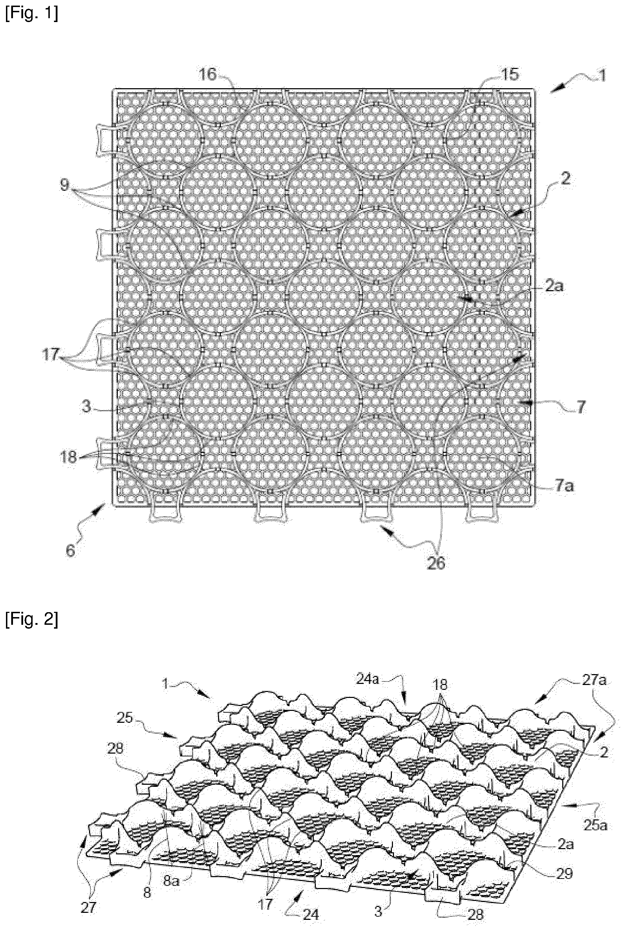

L'onde 16 décrite par cette arête 15 peut être en forme de dents de scie régulières. Préférentiellement, cette onde 16 est de type sinusoïdal comme cela apparait de manière plus visible dans les figures 2 et 3.

La particularité de cette conception consiste en ce que les arêtes 15 d'alvéoles adjacentes 2, 2a se prolongent tout autour d'un noeud d'intersection 9 par des parties en dépression 18 comportant, partant du sommet 17 correspondant à ce noeud d'intersection 9, une portion d'arête descendante 19 agissant telle une jambe de force à l'égard de ce dernier.

Ces jambes de forces correspondant à ces portions d'arête descendante 19 s'étendent, selon la configuration des alvéoles 2, 2a, dans trois ou quatre directions autour d'un sommet 17 défini par un noeud d'intersection 9 et contribuent, ainsi, au renforcement de la tenue mécanique à l'écrasement d'un tel noeud d'intersection 9. En somme, cette configuration a pour conséquence de renforcer la portance définie par les sommets 17 des alvéoles 2, 2a d'une dalle 1 selon l'invention.

Une partie en dépression 18 comporte, par conséquent entre deux sommets 17 consécutifs d'une arête 15 de la paroi périphérique 3 d'une alvéole 2, 2a, deux portions d'arête descendante 19 opposées se rejoignant dans une zone médiane 20 correspondant, sensiblement, à la zone la plus basse de cette partie en dépression 18. En somme, au niveau de cette zone médiane 20 la paroi périphérique 3 d'une alvéole 2, 2a est de hauteur 8a la plus faible.

Avantageusement, tel que représenté dans la figure 6a dans la zone médiane 20 entre deux portions d'arête descendante 19 opposées, l'arrête 15 d'une partie en dépression 18 se situe à une distance d d'un plan P, passant par les sommets, supérieure à 5 millimètres, de préférence supérieure à 10 millimètres, de préférence supérieure à 15 millimètres.

Selon une particularité de l'invention, au moins certaines des parties en dépression 18 que comporte une arête 15 d'une alvéole 2, 2a, préférentiellement toutes les parties en dépression 18, comportent au moins une encoche 21 de limitation de déformation. Selon un mode de réalisation avantageux, cette encoche 21 se situe au point le plus bas de la partie en dépression 18. Dans le mode d'exécution préférentiel illustré dans les figures, ce point le plus bas correspond la zone médiane 20 d'une partie en dépression 18.

Le sol sur lequel vient reposer une dalle 1 peut être de forme convexe ou comporter des concavités auxquelles doit pouvoir s'adapter cette dalle 1 tout en assurant, au-delà d'une certaine limite, l'une de ses fonctions premières, à savoir la stabilisation de sol.

Comme souhaite l'illustrer les figures 6a et 6b, ces encoches 21 favorisent la déformation d'une alvéole 2, 2a en lui permettant d'emprunter une forme convexe, mais aussi concave. Mais dans ce dernier cas, ces encoches 21 contribuent à limiter cette déformation en concavité de la dalle 1.

Ainsi, les encoches 21 agissent plus particulièrement sous l'effet d'une déformation appliquée sur une dalle 1, déformation représentée par la flèche P et ayant pour conséquence de refermer ces encoches 21. Dans ce cas, les parois latérales 22, 23 de ces dernières, habituellement écartées d'une largeur I, se rejoignent et, par opposition l'une contre l'autre, limitent cette déformation, plus exactement renforcent la résistance à la déformation de la dalle 1.

Comme indiqué plus haut, les alvéoles reposent sur une plaque de base ajourée 7 comportant des ouvertures 7a de section préférentiellement inférieure à celle des alvéoles 2, 2a. Ces ouvertures 7a représentent, avantageusement, plus de 50 % de la surface de la plaque de base ajourée 7. Elles peuvent-elles de forme ronde, ovoïde, polygonale. Dans une configuration préférentielle, ces ouvertures 7a confèrent à la plaque de base ajourée 7 une structure en nid d'abeille.

Une dalle 1 conforme invention comporte, encore, au niveau de ses côtés 24, 24a, 25, 25a des moyens d'emboîtement réciproque 26 conçus pour relier, par emboîtement, plusieurs dalles 1 les unes aux autres. Concrètement, de tels moyens d'emboîtement réciproque 26 comportent des premiers moyens d'emboîtement 27 sur certains côtés 24, 25 de la dalle 1 et des moyens d'emboîtement complémentaires 27a sur les autres côtés 24a, 25a de cette dalle 1, ceci pour coopérer, respectivement, avec des moyens d'emboîtement complémentaire 27a et des premiers moyens d'emboîtement 27 équipant sur les côtés 24a, 25a et les côtés 24, 25 des dalles adjacentes.

Selon l'invention, les premiers moyens d'emboîtement 27 sont définis par au moins un tenon 28 en forme de queue d'aronde sur un côté 24, 25 de la dalle 1 et conçu pour venir s'emboîter suivant une direction perpendiculaire au plan d'une dalle 1, dans une mortaise 29 de forme ajustée formant les moyens d'emboîtement complémentaire 27a sur le côté 24a, 25a de la dalle 1.

Dans la configuration illustrée sur les figures, une dalle 1 comporte sur ses côtés 24, 25 plusieurs tenons 28 disposés en concordance de mortaises 29 sur ses côtés 24a 25a. Dans ce mode de réalisation visible sur les figures, les tenons 28 sont saillants en bordure de la plaque de base ajourée 7 et conçus pour s'emboîter par le dessus, perpendiculairement au plan d'une dalle 1, dans des mortaises 29 ménagées au-dessus et en bordure de la plaque de base ajourée 7 sur les côtés 24a, 25a d'une dalle 1 adjacente.

Bien entendu, on pourrait imaginer une cinématique inversée avec des mortaises saillantes sur les côtés 24a, 24b d'une dalle 1 de manière apte à coopérer par emboîtement, par le dessus, avec des tenons surmontant, en bordure, la plaque de base ajourée 7 sur les côtés 24, 25 d'une dalle 1 adjacente.

Préférentiellement, les premiers moyens d'emboîtement 27 et les moyens d'emboîtement complémentaire 27a se situent dans un plan au-dessus de la plaque de base ajourée 7.

Selon une particularité de l'invention, un tenon 28 et/ou une mortaise 29 sont conçus en matériau synthétique et élastiquement déformable. Selon un mode de réalisation préférentielle, le tenon 28 est évidé en son centre lui confèrent un pourtour déformable sous contrainte.

Les avantages qui découlent de ce caractère de déformabilité élastique des moyens d'emboîtement réciproques, mais aussi de leur forme en queue d'aronde consistent en ce qu'ils procurent une certaine flexibilité entre les dalles 1 lorsqu'elles sont mises sous contraintes les unes par rapport aux autres, par exemple lors d'une implantation en pente ou dans d'autres circonstances contraignantes d'installation.

Tel que déjà indiqué plus haut, une dalle 1 selon l'invention est préférentiellement conçue en matière synthétique, notamment issue de matériaux recyclés. Avantageusement, elle est conçue en une seule pièce et résulte d'un procédé de fabrication par moulage.

Les dalles selon l'invention sont en mesure de répondre efficacement à des contraintes esthétiques, en offrant des propriétés avantageuses en termes de stabilisation de sol, de retenu du matériau de comblement et, en même temps, de portance, ceci en comparaison à des dalles connues de l'état de la technique.

## Revendications

1. Dalle (1) de stabilisation de solà alvéoles (2 ; 2a) destinées à contenir un matériau de comblement, par exemple un substrat de plantation, tel que de la terre, ou encore des granulats de type sable, gravier ou autre, une alvéole (2 ; 2a) comportant une paroi périphérique (3) s'étendant perpendiculairement depuis un plan de base (4) et comprenant un chant inférieur (5) rendu solidaire, par collage et/ou soudure et/ou emboîtement, d'un support (6), les alvéoles (2 ; 2a) étant de section polygonale et comportant des noeuds d'intersection (9) entre elles, définis par deux côtés adjacents (10, 11) d'une alvéole (2) et au moins un côté (12, 13) d'une autre alvéole (2a) juxtaposée, **caractérisé en ce que** la paroi périphérique (3) d'une alvéole (2, 2a) comporte un chant supérieur définissant une arête (15) en forme d'onde (16) en dents de scie régulières ou de type sinusoïdal, comprenant des sommets (17) entre lesquelles s'étendent des parties en dépression (18), une partie en dépression (18) comportant, entre deux sommets (17) consécutifs d'une arête (15) de la paroi périphérique (3) d'une alvéole (2, 2a), deux portions d'arête descendante (19) opposées se rejoignant dans une zone médiane (20), les sommets (17) étant partagées entre au moins deux alvéoles adjacentes (2, 2a) et se situent à hauteur d'un noeud d'intersection (9) entre ces alvéoles adjacentes (2, 2a).

2. Dalle (1) de stabilisation de sol à alvéoles (2 ; 2a) destinées à contenir un matériau de comblement, par exemple un substrat de plantation, tel que de la terre, ou encore des granulats de type sable, gravier ou autre, une alvéole (2 ; 2a) comportant une paroi périphérique (3) s'étendant perpendiculairement depuis un plan de base (4) et comprenant un chant inférieur (5) rendu solidaire, par collage et/ou soudure et/ou emboîtement, d'un support (6), les alvéoles (2 ; 2a) étant de section ronde ou ovoïde et comportant des noeuds d'intersection (9) entre elles, définis par la zone tangentielle (14) entre deux alvéoles (2, 2a) contiguës, **caractérisé en ce que** la paroi périphérique (3) d'une alvéole (2, 2a) comporte un chant supérieur définissant une arête (15) en forme d'onde (16) en dents de scie régulières ou de type sinusoïdal, comprenant des sommets (17) entre lesquelles s'étendent des parties en dépression (18), une partie en dépression (18) comportant, entre deux sommets (17) consécutifs d'une arête (15) de la paroi périphérique (3) d'une alvéole (2, 2a), deux portions d'arête descendante (19) opposées se rejoignant dans une zone médiane (20), les sommets (17) étant partagées entre au moins deux alvéoles adjacentes (2, 2a) et se situent à hauteur d'un noeud d'intersection (9) entre ces alvéoles adjacentes (2, 2a).

3. Dalle (1) selon la revendication 1 ou 2, **caractérisée en ce que** la zone médiane (20) correspond à la zone la plus basse de la partie en dépression (18) correspondant à la hauteur (h) la plus faible de la paroi périphérique (3) d'une alvéole (2, 2a).

4. Dalle (1) selon la revendication 3, **caractérisée en ce que** dans la zone médiane (20) entre deux portions d'arête descendante (19) opposées, l'arrête (15) d'une partie en dépression (18) se situe à une distance (d) d'un plan (P), passant par les sommets, supérieure à 5 millimètres, de préférence supérieure à 15 millimètres.

5. Dalle (1) selon l'une quelconque des revendications précédentes, **caractérisée en ce qu'**au moins certaines des parties en dépression (18) que comporte une arête (15) d'une alvéole (2, 2a), préférentiellement toutes les parties en dépression (18), comportent au moins une encoche (21) de limitation de déformation.

6. Dalle (1) selon la revendication 5, **caractérisée en ce qu'**une encoche (21) se situe au niveau de la zone médiane (20) d'une partie en dépression (18).

7. Dalle (1) selon l'une quelconque des revendications précédentes, **caractérisée en ce que** le support (6) est défini par une plaque de base ajourée (7).

8. Dalle (1) selon la revendication 7, **caractérisée en ce que** plaque de base ajourée (7) comporte des ouvertures (7a) de section inférieure à celle des alvéoles (2, 2a), ces ouvertures (7a) représentant plus de 50 % de la surface de la plaque de base ajourée (7).

9. Dalle (1) selon l'une quelconque des revendications précédentes, **caractérisée en ce qu'**elle comporte des côtés (24, 24a, 25, 25a) pourvus de moyens d'emboîtement réciproque (26) conçus pour relier, par emboîtement, plusieurs dalles (1) les unes aux autres et comportant des premiers moyens d'emboîtement (27) sous forme d'au moins tenon (28) sur certains côtés (24, 25) de la dalle (1) et des moyens d'emboîtement complémentaires (27a) sous forme d'au moins une mortaise (29) sur les autres côtés (24a, 25a).

10. Dalle (1) selon la revendication 7 ou 8 et la revendication 8, **caractérisée en ce que** le ou les tenons (28) sont saillants en bordure de la plaque de base ajourée (7) et conçus pour s'emboîter par le haut, perpendiculairement au plan d'une dalle (1), dans la ou les mortaises (29) ménagées au-dessus et en bordure de la plaque de base ajourée (7) sur les côtés (24a, 25a) d'une dalle (1) adjacente.

11. Dalle (1) selon la revendication 9 ou 10, **caractérisée en ce que**, les premiers moyens d'emboîtement (27) et les moyens d'emboîtement complémentaire (27a) se situent dans un plan au-dessus de la plaque de base ajourée (7).

12. Dalle (1) selon l'une des revendications 9 à 11, **caractérisée en ce que** le ou les tenon (28) et/ou la ou les mortaises (29) sont conçus en matériau synthétique et élastiquement déformable.

13. Dalle (1) selon l'une quelconque des revendications précédentes, **caractérisée en ce qu'**elle est conçue par moulage en matière synthétique, notamment issue de matériaux recyclés. 1
